(19) Europäisches Patentamt
European Patent Office
Office européen des brevets

(11) **EP 1 922 217 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **06793124.6**

(22) Anmeldetag: **31.08.2006**

(51) Int Cl.:
**B60C 23/06** (2006.01)

(86) Internationale Anmeldenummer:
**PCT/EP2006/065890**

(87) Internationale Veröffentlichungsnummer:
**WO 2007/028766 (15.03.2007 Gazette 2007/11)**

(54) **VERFAHREN ZUR VERBESSERUNG EINES INDIREKT MESSENDEN REIFENDRUCKÜBERWACHUNGSSYSTEMS**

METHOD FOR IMPROVING AN INDIRECTLY MEASURING TIRE MONITORING SYSTEM

PROCEDE D'AMELIORATION D'UN SYSTEME DE SURVEILLANCE DE LA PRESSION DES PNEUS A MESURE INDIRECTE

(84) Benannte Vertragsstaaten:
**DE FR**

(30) Priorität: **09.09.2005 DE 102005043174
31.08.2006 DE 102006040912**

(43) Veröffentlichungstag der Anmeldung:
**21.05.2008 Patentblatt 2008/21**

(73) Patentinhaber:
- **Continental Teves AG & Co. oHG
60488 Frankfurt (DE)**
- **Continental Teves, Inc.
Auburn Hills, MI 48326 (US)**

(72) Erfinder:
- **KOUKES, Vladimir
64297 Darmstadt (DE)**

- **GRIESSER, Martin
65760 Eschborn (DE)**
- **WAGNER, Michel
64289 Darmstadt (DE)**
- **BAUER, Geoffrey, B.
North Ville, Michigan 48167 (US)**

(74) Vertreter: **Brand, Markus
c/o Continental Teves AG & Co. oHG,
Guerickestrasse 7
60488 Frankfurt am Main (DE)**

(56) Entgegenhaltungen:
**WO-A-01/51298          US-B2- 6 644 108**

**Beschreibung**

Die Erfindung betrifft ein Verfahren gemäß Oberbegriff von Anspruch 1. Ferner betrifft die Erfindung ein Computerprogrammprodukt gemäß Anspruch 10.

Eine zuverlässige Überwachung des Reifendrucks an allen Rädern eines Kraftfahrzeugs ist für die Sicherheit des Fahrzeuges von großer Bedeutung. Es existieren verschiedene Ansätze, wie Reifendrucküberwachungssysteme realisiert werden können. Es gibt so genannte direkt messende Reifendrucküberwachungssysteme, z.B. beschrieben in der Anmeldung DE 199 26 616 C2, welche mittels Drucksensoren in den einzelnen Reifen den jeweiligen Druck in dem zugehörigen Rad ermitteln. Solche Systeme überwachen den Reifendruck an allen Rädern unabhängig. Außerdem sind so genannte indirekt messende Reifendrucküberwachungssysteme z.B. aus der DE 100 58 140 A1 bekannt (DDS: Deflation Detection System), welche aus Hilfsgrößen, z.B. durch Vergleich der Drehzahlinformationen der einzelnen Räder, einen Druckverlust ermitteln können. Weiterhin ist aus der Schrift WO 2005/072995 A1 ein Verfahren zur indirekten Reifendrucküberwachung bekannt, in welchem ein bekanntes indirekt messendes Reifendrucküberwachungssystem (DDS) unter Berücksichtigung der Torsionseigenfrequenz der Fahrzeugreifen verbessert wird.

Ein Verfahren gemäß dem Oberbegriff des Anspruchs 1 ist aus der US 6,644,108 B2 bekannt.

Indirekt messende Druckverlusterkennungsverfahren auf Basis der Raddrehzahlinformationen lernen so genannte Referenzwerte ein, welche im Wesentlichen zum kreuzweisen Vergleich der einzelnen Räder dienen. Bei einem vierrädrigen Fahrzeug hat sich beispielsweise die Betrachtung dreier unabhängiger Referenzwerte durchgesetzt. Ein erster Referenzwert beschreibt das Verhältnis zweier sich an einer Achse befindender Räder, ein zweiter Referenzwert beschreibt das Verhältnis zweier sich an derselben Fahrzeugseite befindender Räder und ein dritter Referenzwert beschreibt das Verhältnis zweier sich diagonal gegenüberliegender Räder.

Weiterhin nutzen indirekt messende Reifendrucküberwachungssysteme oftmals die Informationen von bereits im Fahrzeug bestehenden Systemen, z.B. die Raddrehzahlinformationen eines Anti-Blockiersystems (ABS), um Schlussfolgerungen über die Reifendrücke zu ziehen. Diese Informationen müssen mit statistischen Methoden verarbeitet werden. Dabei können lange Verarbeitungszeitintervalle die rechtzeitige Bereitstellung des Druckverlusterkennungssystems beim Lernen und/oder beim Erkennen von Druckverlusten verhindern. Außerdem werden die Reifendrucküberwachungssysteme deaktiviert, wenn die Eingangssignale keine ausreichend gute Qualität besitzen, z.B. wenn durch schlechte Straßenbedingungen das Rauschen der Signale zu groß ist. Um Einlern- und Erkennungszeiten zu verkleinern und die Verfügbarkeit des Systems zu verbessern, ist es erforderlich, das System an die aktuellen Straßenbedingungen anzupassen.

Vorzugsweise umfasst ein Verfahren zur indirekten Druckverlusterkennung eine Einlernphase und eine Drucküberwachungsphase. In der Einlernphase werden Vergleichs(referenz)werte bestimmt. In der Drucküberwachungsphase, welche sich an die Einlernphase anschließt, werden aktuell ermittelte Referenzwerte unter Berücksichtigung von Schwellenwerten für die Druckverlusterkennung mit den eingelernten Vergleichswerten verglichen.

Aufgabe der Erfindung ist es, ein Verfahren zur Anpassung eines Reifendrucküberwachungssystems an die aktuellen Straßenbedingungen bereitzustellen, welches ein indirekt messendes Reifendrucküberwachungssystem oder ein kombiniertes Reifendrucküberwachungssystem, welches ein indirekt und ein direkt messendes Reifendrucküberwachungssystem beinhaltet, verbessert.

Diese Aufgabe wird erfindungsgemäß durch das Verfahren gemäß Anspruch 1 gelöst.

Der Erfindung liegt der Gedanke zugrunde, eine Rauschanalyse des Referenzwertes bzw. der Referenzwerte durchzuführen und dann in Abhängigkeit des Ergebnisses der Rauschanalyse eine Anpassung mindestens eines Schwellenwertes durchzuführen.

Unter Rauschanalyse wird erfindungsgemäß eine Analyse der Variation oder Streubreite oder Streuung der Werte einer Größe verstanden. Eine einfache Form der Rauschanalyse ist vorzugsweise dadurch möglich, dass direkt aufeinander folgende Werte einer Größe miteinander verglichen werden, insbesondere wird die Differenz zweier aufeinander folgender Werte betrachtet. Ist diese Differenz z.B. größer als ein vorgegebener Schwellenwert, so wird auf ein Rauschen der Größe erkannt.

Bevorzugt wird eine Anpassung mindestens eines Schwellenwertes durchgeführt, wenn die Rauschanalyse ein Rauschen des Referenzwertes feststellt, welches länger als eine vorgegebene Zeitdauer anhält.

In einer bevorzugten Ausführungsform der Erfindung ist der Schwellenwert bzw. sind die Schwellenwerte, welche(r) in Abhängigkeit von dem Ergebnis der Rauschanalyse angepasst wird/werden, ein Schwellenwert zur Rauscherkennung und/oder ein Schwellenwert zur Druckverlusterkennung. Besonders bevorzugt ist der Schwellenwert bzw. sind die Schwellenwerte, welche(r) in Abhängigkeit von dem Ergebnis der Rauschanalyse angepasst wird/werden, ein Schwellenwert bzw. Schwellenwerte zur Rauscherkennung.

Bevorzugt wird eine Mittelung von Werten eines Referenzwertes durchgeführt, wobei eine Auswahl der zur Mittelwertbildung berücksichtigten Werte in Abhängigkeit von dem Ergebnis der Rauschanalyse durchgeführt wird.

Ebenso ist es bevorzugt, dass anstatt oder zusätzlich zu der in Abhängigkeit von dem Ergebnis der Rauschanalyse durchgeführten Auswahl der zur Mittelwertbildung berücksichtigten Werte eine Mittelung von Werten eines Referenzwertes durchgeführt wird, wobei eine Anpassung der Anzahl der zur Mittelwertbildung berücksichtigten Werte

- in Abhängigkeit von dem Ergebnis der Rauschanalyse oder der Anpassung des Schwellenwertes zur Rauscherkennung und/oder

- in Abhängigkeit von einem Maß für die Streuung der Werte, durchgeführt wird. Das Maß für die Streuung der Werte ist dabei besonders bevorzugt die Standardabweichung der Werte.

In einer weiteren bevorzugten Ausführungsform wird mindestens ein Schwellenwert zur Druckverlusterkennung verwendet, welcher in Abhängigkeit von einem Maß für die Streuung der Werte eines Referenzwertes angepasst wird. Auch hierbei ist besonders bevorzugt die Standardabweichung der Werte das Maß für die Streuung der Werte.

In einer Weiterbildung der Erfindung wird eine Abhängigkeit eines Referenzwertes von einem Fahrparameter durch eine Bestimmung der Parameter eines funktionalen Zusammenhangs gewonnen. Dabei ist der Fahrparameter besonders bevorzugt die Fahrzeuggeschwindigkeit oder ein Raddrehmoment. Für den funktionalen Zusammenhang wird besonders bevorzugt ein linearer Zusammenhang angenommen. Damit sind die beiden zu bestimmenden Parameter des funktionalen Zusammenhangs die Steigung und der "Offset" der Referenzwert bei einem Wert des Fahrparameters von Null.

Zur Bestimmung der Parameter des funktionalen Zusammenhangs werden bevorzugt einzelne Werte des Referenzwertes oder Mittelwerte des Referenzwertes verwendet. Wenn die Abhängigkeit des Referenzwertes von dem Fahrparameter stark ist, dann ist es vorteilhaft die Parameter des funktionalen Zusammenhangs durch Anfitten einzelner Werte des Referenzwertes zu bestimmen.

Vorzugsweise wird die Bestimmung der Parameter des funktionalen Zusammenhangs durchgeführt, sobald ein neues Wertepaar aus Fahrparameter und Referenzwert bestimmt wurde. Dadurch ist das Verfahren unter der Annahme eines linearen Zusammenhangs schon ab zwei Wertepaaren in der Lage, die Parameter des Zusammenhanges zu bestimmen. Mit jedem neu hinzu kommmenden Wertepaar werden die Parameter neu bestimmt und es steigt so die Genauigkeit oder Zuverlässigkeit der bestimmten Parameter.

In einer bevorzugten Ausführungsform werden die Parameter des funktionalen Zusammenhangs zur Erkennung eines Druckverlustes verwendet. Besonders bevorzugt werden die während einer Einlernphase des Systems bestimmten Parameter zur Druckverlusterkennung verwendet. Die Verwendung der Parameter des funktionalen Zusammenhangs zur Erkennung eines Druckverlustes ist besonders dann vorteilhaft, wenn die Abhängigkeit des Referenzwertes von dem Fahrparameter stark ist und die Parameter durch Anfitten einzelner Werte des Referenzwertes bestimmt wurden. Bei einer schwachen Abhängigkeit des Referenzwertes von dem Fahrparameter wird vorzugsweise der gemittelte Referenzwert direkt mit dem entsprechenden eingelernten Mittelwert verglichen und zur Druckverlusterkennung herangezogen.

In einer Weiterbildung der Erfindung wird/werden die Rauschanalyse und/oder die Bestimmung der Parameter des funktionalen Zusammenhangs in der Einlernphase des Systems, in welcher Vergleichswerte bestimmt werden, und/oder in der Drucküberwachungsphase durchgeführt.

Ein Vorteil des erfindungsgemäßen Verfahrens liegt darin, dass sich die Tendenz eines indirekt messenden oder kombinierten Reifendrucküberwachungssystems, eine Fehlwarnung zu erzeugen, reduziert. Somit ist eine zuverlässigere Reifendruckverlusterkennung möglich. Neben der Robustheit des Reifendrucküberwachungssystems erhöht sich auch die Verfügbarkeit des Systems bei schlechten Straßenbedingungen. Die Zeitintervalle für das Lernen/Erkennen werden dadurch verkürzt.

Das erfindungsgemäße Verfahren kann in einem indirekt messenden Reifendrucküberwachungssystem, welches ausschließlich auf der Auswertung der Abrollumfänge der Räder basiert, oder auch in einem indirekt messenden Reifendrucküberwachungssystem, welches neben der Auswertung der Abrollumfänge auch eine Frequenzanalyse der Reifenschwingungen durchführt, durchgeführt werden. Eine Durchführung des erfindungsgemäßen Verfahrens in einem kombinierten Reifendrucküberwachungssystem, in welchem ein indirekt messendes Reifendrucküberwachungssystem mit einem direkt messenden Reifendrucküberwachungssystem kombiniert wird, ist ebenfalls möglich.

Die Erfindung betrifft auch ein Computerprogrammprodukt, welches einen Algorithmus nach dem vorstehend beschriebenen Verfahren definiert.

Weitere bevorzugte Ausführungsformen der Erfindung ergeben sich aus den Unteransprüchen und der nachfolgenden Beschreibung anhand von Figuren.

Es zeigen

Fig. 1     eine schematische Darstellung eines Ablaufs eines bespielgemäßen Verfahrens,

Fig. 2     schematisch einen zeitlichen Verlauf der Anpassung eines Schwellenwertes zur Rauscherkennung,

Fig. 3    einen Zusammenhang zwischen einem Referenzwert und einem Fahrparameter, und

Fig. 4    eine schematische Darstellung eines Ablaufs eines beispielgemäßen Verfahrens zur Bestimmung der Parameter eines linearen Zusammenhangs zwischen einem Referenzwert und einem Fahrparameter.

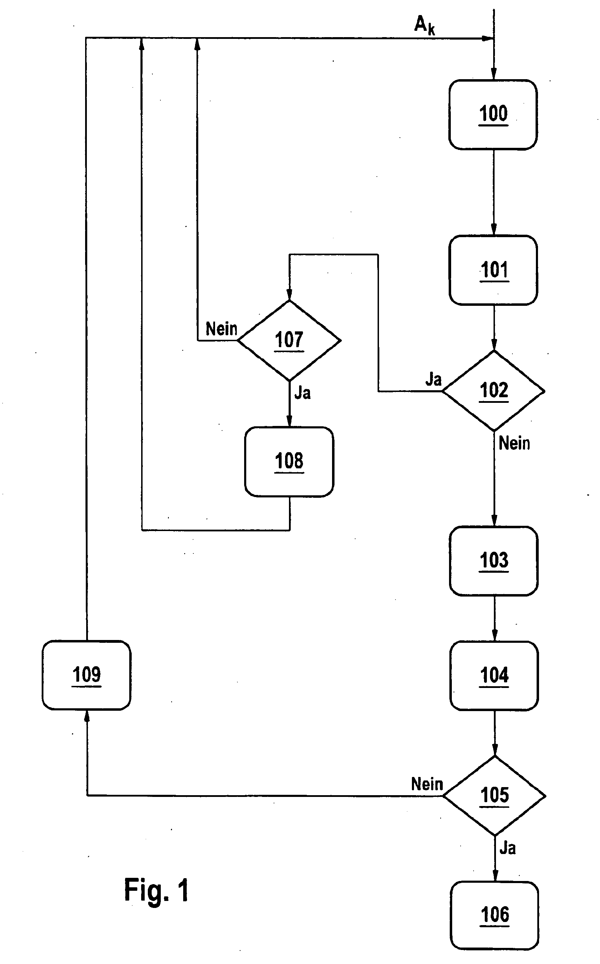

In Fig. 1 ist der Ablauf eines beispielgemäßen Verfahrens eines adaptiven indirekt messenden Reifendrucküberwachungssystems schematisch dargestellt. Beispielgemäß wird ein Referenzwert A für die Drucküberwachung benutzt. Sobald ein neuer Wert $A_k$ für den Referenzwert A vorliegt, wird dieser eingelesen (Block 100). Bei der Rauschanalyse 101 wird überprüft, ob das Rauschen des Referenzwertes A nicht zu groß ist. Dazu wird jeder neue Wert $A_k$ mit dem vorangegangenen Wert $A_{k-1}$ verglichen. Hierzu wird der Betrag der Differenz $|A_k-A_{k-1}|$ mit einem vorgegebenen Schwellenwert T zur Rauscherkennung verglichen (Ist $|A_k-A_{k-1}| > T$ ?, Block 102). Wenn der Betrag $|A_k-A_{k-1}|$ größer als der Schwellenwert T ist, dann wird ein Flag "Noise" gesetzt, d.h. das Rauschen des Referenzwertes A wird als zu groß angesehen. Wenn festgestellt wird, dass das Rauschen von A zu groß ist (Noise=1), dann wird $A_k$ nicht weiter für das Einlernen oder die Reifendrucküberwachung benutzt. Das System wartet, bis ein neuer Wert $A_{k+1}$ anliegt.

Bisher wurde ein fester Schwellenwert T bei der Rauschanalyse 101, 102 verwendet. Dies führt aber in einigen Fällen zu einer vollständigen langzeitigen Abschaltung/Ausfall des Reifendrucküberwachungssystems. Zum Beispiel ist das Reifendrucküberwachungssystem auf Kieselsteinstrassen nicht arbeitsfähig. Hier sind die Beträge $|A_k-A_{k-1}|$ immer groß. Andererseits sind es nicht einzelne Sprünge des Signals des Referenzwertes A, sondern kontinuierliche große Abweichungen.

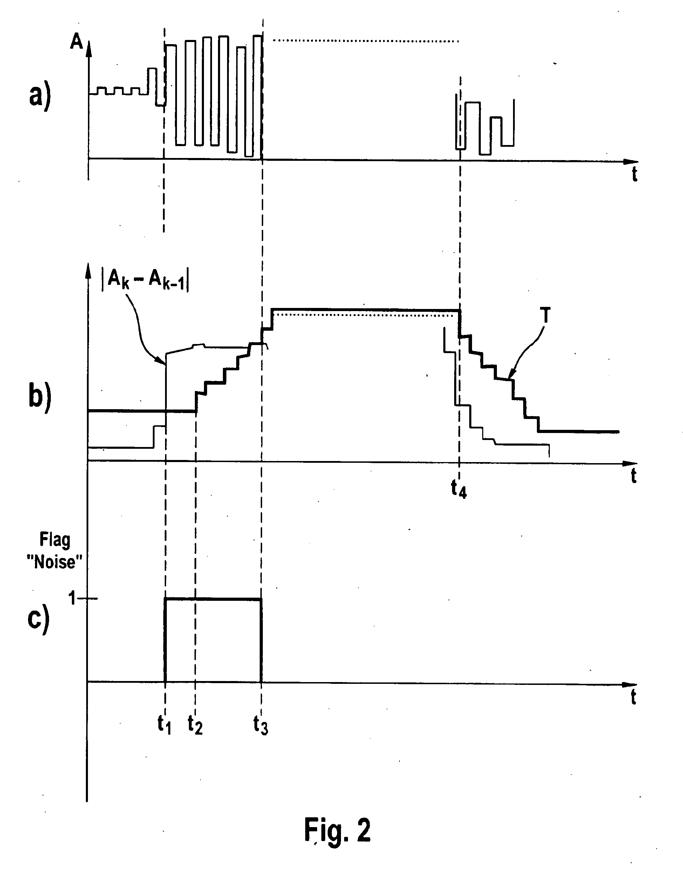

Um eine langfristige Arbeitsunfähigkeit des Reifendrucküberwachungssystems zu vermeiden, wird beispielsgemäß der Schwellenwert T für die Rauschkontrolle an die Straßenbedingungen adaptiert (Block 108). Hierzu wird zunächst geprüft, ob das Rauschen des Referenzwertes A schon einige Zeit andauert (Block 107). Wenn das Flag "Noise" schon längere Zeit auf 1 steht, wird der Schwellenwert T stufenweise um einen Wert $\Delta T$ vergrößert (Block 108, siehe auch Fig. 2). Irgendwann ist der Schwellenwert T dann so groß, dass der Betrag $|A_k-A_{k-1}|$ kleiner als der Schwellenwert T ist, d.h. die Schwankungen des Referenzwertes A werden nicht mehr als Rauschen interpretiert. Die Werte $A_k$ werden dann weiterverwendet ("nein"-Verzweigung in Block 102).

Wenn die Schwankungen von A unterhalb des aktuellen Schwellenwerts T liegen, d.h. es wird kein Rauschen erkannt (Noise=0), dann wird der neue $A_k$-Wert zur Berechnung eines Mittelwertes Ä für den Referenzwert A (Block 103) und eines Gütemaßes für die Streuung des Referenzwertes A (Block 104), insbesondere einer Standardabweichung $\sigma(\hat{A})$, verwendet. Bisher wurde zur Berechnung des Mittelwertes Ä eine feste Anzahl N von Werten $A_k$ herangezogen. Die Signifikanz der Berechnungsergebnisse wird dann überprüft (Block 105). Wenn die Streuung des Referenzwertes A gering genug ist, z.B. wenn die Standardabweichung $\sigma(\hat{A})$ kleiner als ein vorgegebener Schwellenwert D ist, dann wird das Ergebnis der Berechnung, insbesondere der Mittelwert Ä, zum Einlernen oder zur Druckverlusterkennung verwendet (Block 106).

Die grundlegenden Blöcke des Ablaufs sind:

-    Rauschanalyse (Blöcke 101 und 102),
-    Berechnung eines Mittelwerts $\hat{A}$ des Referenzwertes A (Filterung) (Block 103),
-    Berechnung einer Standardabweichung $\sigma(\hat{A})$ (Block 104), und
-    Überprüfung der Signifikanz des Ergebnisses (Block 105). Diese Blöcke werden sowohl beim (Ein)Lernen des Systems als auch, wenn das System schon eingelernt worden ist, bei der Drucküberwachung bzw. dem Erkennung eines Druckverlustes durchlaufen.

Bevor das Reifendrucküberwachungssystem für die Drucküberwachung bereits ist, muss das System eingelernt werden. Während des Einlernens wird ein Mittelwert $\hat{A}_0$ des Referenzwertes A bei einer Fahrt ohne Druckverlust bestimmt. Dieser Wert $\hat{A}_0$ wird dann als Vergleichsgröße zum Erkennen eines Druckverlustes benutzt. Wenn bei der Drucküberwachung festgestellt wird, dass der aktuelle Mittelwert Ä des Referenzwertes A um mehr als einen Schwellenwert S von dem Mittelwert $\hat{A}_0$ beim Einlernen abweicht, d.h. wenn $|\hat{A}_0 - \hat{A}| \geq S$, dann wird eine Warnung (z.B. "Druckverlust liegt vor") ausgegeben.

Die Vergrößerung des Schwellenwertes T bei der Rauschkontrolle (Block 108) kann die Genauigkeit des bestimmten Mittelwertes Ä verschlechtern bzw. die Streuung des Referenzwertes A wird dadurch steigen. Aus diesem Grund wird der Schwellenwert S für die Warnungsauslösung ("Druckverlust liegt vor") ebenfalls in Abhängigkeit von der Rauschanalyse oder auch in Abhängigkeit von der Streuung des Referenzwertes A vergrößert (Block 108 oder 104).

Eine weitere Möglichkeit zur Verbesserung der Erkennung eines Reifendruckverlustes besteht darin, die Anzahl N der einzelnen Werte $A_k$, welche zur Mittelwertbildung herangezogen werden, entsprechend den aktuellen Bedingungen anzupassen (Block 109). Dies kann sowohl beim Einlernen als auch bei der Drucküberwachung durchgeführt werden. Die Anzahl N der Werte $A_k$ für die Mittelwertbildung wird im beispielsgemäßen Verfahren so lang vergrößert (Block 109), bis die Ergebnisse signifikant werden ("ja"-Verzweigung in Block 105) und der Vertrauensbereich für den Mittelwert Ä

(bzw. $\hat{A}_0$) klein genug wird. Der Mittelwert $\hat{A}_0$ bzw. Ä wird dann zum Einlernen bzw. zur Druckverlusterkennung verwendet (Block 106).

Die Vorgehensweise der Anpassung der Anzahl N der bei der Mittelwertbildung berücksichtigten Werte $A_k$ kann auch benutzt werden, wenn zwar das Flag "Noise" nicht für lange Zeit gesetzt worden ist (meist Noise=0, nur gelegentlich Noise=1) und die Schwelle T nicht geändert worden ist, aber die Streuung des Referenzwertes A zu groß ist.

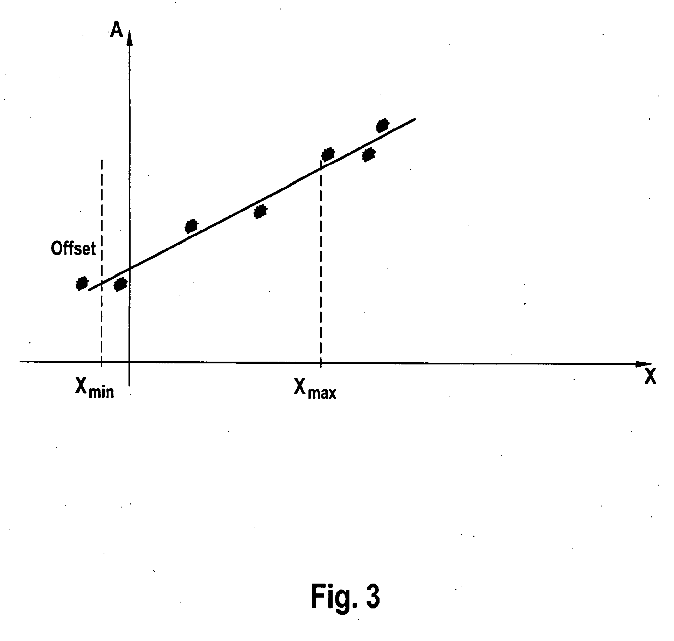

In Fig. 2 ist schematisch ein beispielsgemäßer zeitlicher Verlauf der Anpassung eines Schwellenwertes bei der Rauschanalyse dargestellt. In Fig. 2a sind die Werte $A_k$ des Referenzwertes A als Funktion der Zeit t aufgetragen, in Fig. 2b sind der Betrag der Differenz $|A_k - A_{k-1}|$ sowie der Schwellenwert T dargestellt und in Fig. 3 ist der Verlauf des Flags "Noise" abgebildet. Bis zum Zeitpunkt $t_1$ schwankt der Referenzwert A wenig und der Betrag $|A_k - A_{k-1}|$ ist kleiner als der Schwellenwert T. Ab dem Zeitpunkt $t_1$ zeigt der Referenzwert A ein anhaltendes, starkes Rauschen. Der Betrag $|A_k - A_{k-1}|$ wird größer als der Schwellenwert T und deshalb das Flag "Noise" auf 1 gesetzt. Da das Rauschen anhält, wird ab dem Zeitpunkt $t_2$ der Schwellenwert T stückweise vergrößert. Ab den Zeitpunkt $t_3$ ist der Betrag $|A_k - A_{k-1}|$ wieder kleiner als der aktuelle Schwellenwert T und das Flag "Noise" wird auf 0 zurückgesetzt. Kurz danach wird auch der Schwellenwert T nicht weiter vergrößert. Wenn das Rauschen des Referenzwertes A wieder gering ist, wird auch der Schwellenwert T wieder verkleinert (ab Zeitpunkt $t_4$).

Der Referenzwert A kann von der Fahrzeuggeschwindigkeit, dem Raddrehmoment oder anderen Größen abhängig sein. Ein charakteristischer Fahrparameter sei hier mit X benannt. In diesem Fall kann nach der weiter oben beschriebenen Rauschanalyse ein weiteres Verfahren zur Verbesserung der Druckverlusterkennung benutzt werden. Die Abhängigkeit des Referenzwertes A von dem Fahrparameter X (mathematisch durch eine Funktion A(X) beschrieben) kann in einem begrenzten Intervall von Werten X zwischen $X_{min}$ und $X_{max}$ mit einer Gerade angenähert werden. Dies ist in Fig. 3 graphisch dargestellt. Es gilt in dem Intervall:

$$A = \text{Offset} + \text{Slope} * X \qquad\qquad (1)$$

wobei Slope die Steigung der Geraden und Offset der Wert des Referenzwertes A bei einem Wert des Fahrparameters von Null (X=0) ist. Die Gerade gemäß Gleichung (1) ist definiert, wenn Offset und Slope bekannt sind. Diese Parameter können mit der Hilfe der Methode der kleinsten Quadrate (LS: Least Squares Method) gefunden werden.

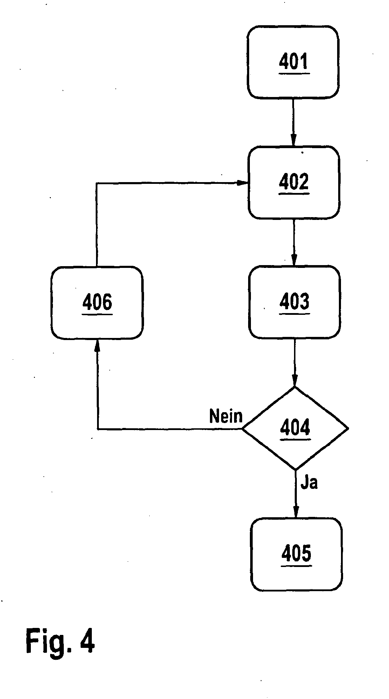

In Fig. 4 ist schematisch der Ablauf eines beispielgemäßen Verfahrens zur Bestimmung der Parameter Offset und Slope dargestellt. Als Eingangsgröße A(X) können entweder einzelner Werte $A_k$ oder gemittelte Referenzwert $\hat{A}$ (bzw. $\hat{A}_0$) verwendet werden. Zuerst wird ein neues Wertepaar aus Fahrparameterwert $X_n$ und zugehöriger Eingangsgröße $A_n$ ($X_n$) eingelesen (Block 401). Die Berechnung der Parameter Offset und Slope wird rekursiv durchgeführt. Sobald zwei oder mehr Wertepaare $X_n$ und $A_n$ ($X_n$) vorhanden sind, kann eine Fitprozedur durchgeführt werden, und die Parameter Offset und Slope können bestimmt werden (Block 402). Nach der Berechnung wird die Qualität bzw. Signifikanz der Ergebnisse analysiert (Block 403) und überprüft, ob sie ausreichend ist (Block 404). Zum Beispiel kann überprüft werden, ob die Anzahl der verwendeten Wertepaare für die Methode der kleinsten Quadrate (LS) groß genug ist, ob die Korrelation zwischen A und X sich an den Betrag von Eins annähert, ob die Werte $X_n$ gleichmäßig im Intervall $[X_{min}, X_{max}]$ verteilt sind und/oder anderes. Wenn die Qualität bzw. Signifikanz ausreichend ist, werden die berechneten Werte der Parameter Offset und Slope zum Einlernen oder zur Drucküberwachung verwendet (Block 405). Solange die Qualität bzw. Signifikanz der Ergebnisse nicht ausreichend ist, werden für jeden neu hinzukommenden Wert $X_n$ und den entsprechenden Wert $A_n$ ($X_n$) Slope and Offset neu berechnet, solange bis die Qualität bzw. Signifikanz der Ergebnisse ausreichend ist. Dabei werden für jede neue Berechnung die Ergebnisse der Berechnung des vorhergehenden Schrittes, also die Ergebnisse für $X_{n-1}$ und $A_{n-1}$ ($X_{n-1}$), wieder verwendet (Block 406).

Während der Einlernphase werden die signifikanten Werte für Offset und Slope als $\text{Offset}_0$ und $\text{Slope}_0$ abgespeichert. Bei der Drucküberwachung werden die abgespeicherten Werte $\text{Offset}_0$ und $\text{Slope}_0$ mit den aktuellen signifikanten Werten für Offset und Slope verglichen und die jeweilige Differenz ΔOffset und ΔSlope gemäß Gleichungen (2) und (3) berechnet:

$$\Delta\text{Offset} = \text{Offset}_0 - \text{Offset} \qquad\qquad (2)$$

$$\Delta\text{Slope} = \text{Slope}_0 - \text{Slope} \qquad\qquad (3)$$

Wenn die Änderungen ΔOffset und ΔSlope der Werte größer als Schwellenwerte sind, dann wird ein Druckverlust erkannt. Z.B. wird ein Druckverlust erkannt, wenn für den Parameter Offset gilt, dass der Betrag von Offset größer als ein entsprechender Schwellenwert W ist, d.h. wenn | ΔOffset | > W, dann wird eine Warnung (z.B. "Druckverlust liegt vor") ausgegeben.

Eine weitere Möglichkeit besteht darin, den Referenzwert A (entweder jeden einzelnen Wert $A_k$ oder einen gemittelten Referenzwert Ä) mit Hilfe der gelernten Gerade zu kompensieren. Dies kann entsprechend der Gleichung (4) durchgeführt werden:

$$A_{komp} = A - Offset_0 - Slope_0 * X \qquad\qquad (4)$$

Wenn festgestellt wird, dass die aktuellen Beträge $|A_{komp}|$ einen Schwellenwert überschreiten und diese Feststellung signifikant ist, dann wird eine Warnung durch das System ausgelöst.

Die Durchführung der Fitprozedur mit einzelnen Referenzwerten $A_k$ als Eingangsgrößen A(X) und die Verwendung der Parameter Offset und Slope zur Erkennung eines Druckverlustes ist besonders dann vorteilhaft, wenn die Abhängigkeit des Referenzwertes A von dem Fahrparameter X stark ist. Bei einer schwachen Abhängigkeit kann auch der gemittelte Referenzwert Ä direkt mit dem entsprechenden eingelernten Mittelwert $\hat{A}_0$ verglichen werden und zur Erkennung eines Druckverlustes herangezogen werden.

Bezugszeichenliste:

| | |
|---|---|
| 100 | Hole neuen Referenzwert $A_k$ |
| 101 | Rauschanalyse |
| 102 | Rauschen? |
| 103 | Filter (Berechnung eines Mittelwertes Ä) |
| 104 | Signifikanz-Analyse (Berechnung einer Standardabweichung $\sigma(\hat{A})$); gegebenenfalls Anpassung eines Schwellenwertes S zur Druckerkennung |
| 105 | Sind die Ergebnisse signifikant? |
| 106 | Verwendung zum Einlernen oder zur Drucküberwachung |
| 107 | anhaltendes Rauschen? |
| 108 | Anpassung von Schwellenwerten |
| 109 | Anpassung der Filter-Konstanten/-Parameter (Anpassung der Anzahl N der Werte bei der Mittelwertbildung) |
| 401 | Hole neues Wertepaar $X_n$ und $A_n(X_n)$ |
| 402 | Berechnung der neuen Parameter Offset und Slope (LS) |
| 403 | Signifikanz-Analyse |
| 404 | Sind die Ergebnisse signifikant? |
| 405 | Verwendung der Parameter Offset und Slope zum Einlernen oder zur Drucküberwachung/Erkennung |
| 406 | Verwendung der Ergebnisse für nächste Berechnung |

**Patentansprüche**

1. Verfahren, mit welchem die Erkennung eines Reifendruckverlustes in einem Reifendrucküberwachungssystems verbessert wird, bei welchem aus Signalen, welche die Raddrehzahlen mehrerer Fahrzeugräder repräsentieren, mindestens ein Referenzwert (A) gebildet wird, wobei aus einem Vergleich eines aktuell bestimmten Referenzwertes mit wenigstens einem Vergleichswert auf einen Druckverlust geschlossen wird, wenn der aktuell bestimmte Referenzwert den Vergleichswert um ein vorgegebenes Maß über- bzw. unterschreitet und eine Rauschanalyse des/der Referenzwerte(s) (101) vorgenommen wird, **dadurch gekennzeichnet, dass** eine Anpassung (108) mindestens eines Schwellenwertes (T, S) in Abhängigkeit von dem Ergebnis der Rauschanalyse (102) durchgeführt wird.

2. Verfahren nach Anspruch 1, **dadurch gekennzeichnet, dass** der Schwellenwert, welcher in Abhängigkeit von dem Ergebnis der Rauschanalyse angepasst wird, ein Schwellenwert (T) zur Rauscherkennung und/oder ein Schwellenwert (S) zu einer Druckverlusterkennung ist/sind.

3. Verfahren nach Anspruch 1 oder 2, **dadurch gekennzeichnet, dass** eine Mittelung (103) von Werten ($A_k$) eines

Referenzwertes durchgeführt wird, wobei

- eine Auswahl der zur Mittelwertbildung berücksichtigten Werte ($A_k$) in Abhängigkeit von dem Ergebnis der Rauschanalyse (102) durchgeführt wird, und/oder
- eine Anpassung der Anzahl (N) der zur Mittelwertbildung berücksichtigten Werte ($A_k$)

  - in Abhängigkeit von dem Ergebnis der Rauschanalyse (102) oder der Anpassung (108) des Schwellenwertes (T) zur Rauscherkennung und/oder
  - in Abhängigkeit von einem Maß für die Streuung (104) der Werte ($A_k$), insbesondere der Standardabweichung, durchgeführt wird.

4. Verfahren nach mindestens einem der Ansprüche 1 bis 3, **dadurch gekennzeichnet, dass** mindestens ein Schwellenwert (S) zur Druckverlusterkennung verwendet wird, welcher in Abhängigkeit von einem Maß für die Streuung (104) der Werte ($A_k$) eines Referenzwertes, insbesondere der Standardabweichung, angepasst wird.

5. Verfahren nach mindestens einem der Ansprüche 1 bis 4, **dadurch gekennzeichnet, dass** eine Abhängigkeit eines Referenzwertes (A) von einem Fahrparameter (X), insbesondere von der Fahrzeuggeschwindigkeit oder dem Raddrehmoment, durch eine Bestimmung der Parameter (Slope, Offset) eines funktionalen Zusammenhangs, insbesondere eines linearen Zusammenhangs, gewonnen wird.

6. Verfahren nach Anspruch 5, **dadurch gekennzeichnet, dass** zur Bestimmung der Parameter (Slope, Offset) des funktionalen Zusammenhangs einzelne Werte ($A_k$) oder Mittelwerte ($\hat{A}$) des Referenzwertes (A) verwendet werden.

7. Verfahren nach Anspruch 5 oder 6, **dadurch gekennzeichnet, dass** die Bestimmung der Parameter (Slope, Offset) des funktionalen Zusammenhangs durchgeführt wird, sobald ein neues Wertepaar aus Fahrparameter ($X_n$) und Referenzwert ($A_n(X_n)$) bestimmt wurde.

8. Verfahren nach mindestens einem der Ansprüche 5 bis 7, **dadurch gekennzeichnet, dass** die Parameter (Slope, Offset) des funktionalen Zusammenhangs, insbesondere die während einer Einlernphase des Systems bestimmten Parameter ($Slope_0$, $Offset_0$), zur Erkennung eines Druckverlustes verwendet werden.

9. Verfahren nach mindestens einem der Ansprüche 1 bis 8, **dadurch gekennzeichnet, dass** die Rauschanalyse und/oder die Bestimmung der Parameter des funktionalen Zusammenhangs in der Einlernphase des Systems, in welcher Vergleichswerte bestimmt werden, und/oder in der Drucküberwachungsphase durchgeführt wird.

10. Computerprogrammprodukt, **dadurch gekennzeichnet, dass** dieses einen Algorithmus definiert, welcher ein Verfahren gemäß mindestens einem der Ansprüche 1 bis 9 umfasst.

**Claims**

1. Method with which the detection of a loss of tyre pressure in a tyre pressure-monitoring system is improved, in which at least one reference value (A) is formed from signals which represent the wheel speeds of a plurality of vehicle wheels, wherein a loss of pressure is detected from a comparison between a currently determined reference value and at least one comparison value if the currently determined reference value exceeds or undershoots the comparison value by a predefined amount, and noise analysis of the reference value or values (101) is performed, **characterized in that** at least one threshold value (T, S) is adapted as a function of the result of the noise analysis (102).

2. Method according to Claim 1, **characterized in that** the threshold value which is adapted as a function of the result of the noise analysis are/is a threshold value (T) for noise detection and/or a threshold value (S) for detecting pressure loss.

3. Method according to Claim 1 or 2, **characterized in that** averaging (103) of values ($A_k$) of a reference value is carried out, wherein

- a selection of the values ($A_k$) is taken into account for the formation of average values as a function of the result of the noise analysis (102), and/or

• the number (N) of the values ($A_k$) which are taken into account for the formation of average values is adapted

  - as a function of the result of the noise analysis (102) or the adaptation (108) of the threshold value (T) for the detection of noise and/or
  - as a function of a measure of the variation (104) of the values ($A_k$), in particular of the standard deviation.

4.  Method according to at least one of Claims 1 to 3, **characterized in that** at least one threshold value (S) for detecting a loss in pressure is used which is adapted as a function of a measure of the variation (104) of the values ($A_k$) of a reference value, in particular of the standard deviation.

5.  Method according to at least one of Claims 1 to 4, **characterized in that** a dependence of a reference value (A) on a driving parameter (X), in particular on the velocity of the vehicle or the wheel torque, is acquired by determining the parameters (slope, offset) of a functional relationship, in particular of a linear relationship.

6.  Method according to Claim 5, **characterized in that** individual values ($A_k$) or average values ($\hat{A}$) of the reference value (A) is used to determine the parameters (slope, offset) of the functional relationship.

7.  Method according to Claim 5 or 6, **characterized in that** the determination of the parameters (slope, offset) of the functional relationship is carried out as soon as a new pair of values of the driving parameter ($X_n$) and reference value ($A_n(X_n)$) has been determined.

8.  Method according to at least one of Claims 5 to 7, **characterized in that** the parameters (slope, offset) of the functional relationship, in particular the parameters ($slope_0$, $offset_0$) which are determined during a learning phase of the system are used to detect a loss in pressure.

9.  Method according to at least one of Claims 1 to 8, **characterized in that** the noise analysis and/or the determination of the parameters of the functional relationship is carried out in the learning phase of the system in which comparison values are determined and/or in the pressure-monitoring phase.

10. Computer programme product, **characterized in that** said computer programme product defines an algorithm which comprises a method according to at least one of Claims 1 to 9.

**Revendications**

1.  Procédé d'amélioration de la détection d'une perte de pression d'un bandage de roue dans un système de surveillance de la pression d'un bandage de roue, dans lequel au moins une valeur de référence (A) est formée à partir de signaux qui représentent la vitesse de rotation de plusieurs roues d'un véhicule, une comparaison entre une valeur de référence déterminée à tout instant et au moins une valeur comparative permettant de conclure à une perte de pression si la valeur de référence déterminée à ce moment est supérieure ou inférieure d'une valeur prédéterminée à la valeur comparative, une analyse du bruit de ou des valeurs de référence (101) étant réalisée, **caractérisé en ce que**
    une adaptation (108) d'au moins une valeur de seuil (T, S) est réalisée en fonction du résultat de l'analyse de bruit (102).

2.  Procédé selon la revendication 1, **caractérisé en ce que** la valeur de seuil qui est adaptée en fonction des résultats de l'analyse de bruit est une valeur de seuil (T) de détection du bruit et/ou une valeur de seuil (S) de détection d'une perte de pression.

3.  Procédé selon les revendications 1 ou 2, **caractérisé en ce que** l'on réalise le calcul (103) de la moyenne de valeurs ($A_k$) d'une valeur de référence,

    - une sélection des valeurs ($A_k$) prises en compte dans la formation de la valeur moyenne étant réalisée en fonction du résultat de l'analyse de bruit (102) et/ou
    - une adaptation du nombre (N) des valeurs ($A_k$) prises en compte dans la formation de la valeur moyenne étant réalisée
    - en fonction des résultats de l'analyse de bruit (102) ou de l'adaptation (108) de la valeur de seuil (T) utilisée pour la détection du bruit et/ou

- en fonction d'un niveau de dispersion (104) des valeurs ($A_k$) et en particulier de l'écart type.

**4.** Procédé selon au moins l'une des revendications 1 à 3, **caractérisé en ce qu'**au moins une valeur de seuil (S) qui est adaptée en fonction du niveau de dispersion (104) des valeurs ($A_k$) d'une valeur de référence, en particulier de l'écart type, est utilisée pour la détection d'une perte de pression.

**5.** Procédé selon au moins l'une des revendications 1 à 4, **caractérisé en ce que** la dépendance entre une valeur de référence (A) et un paramètre de conduite (X), en particulier la vitesse du véhicule ou le couple de rotation appliqué sur les roues, est définie en déterminant les paramètres (pente, décalage) d'une association fonctionnelle et en particulier d'une association linéaire.

**6.** Procédé selon la revendication 5, **caractérisé en ce que** pour déterminer les paramètres (pente, décalage) de l'association fonctionnelle, on utilise des valeurs ($A_k$) distinctes ou des valeurs moyennes ($Â$) de la valeur de référence (A).

**7.** Procédé selon les revendications 5 ou 6, **caractérisé en ce que** la détermination des paramètres (pente, décalage) de l'association fonctionnelle est réalisée dès qu'une nouvelle paire de valeurs du paramètre de conduite ($X_n$) et de la valeur de référence ($A_n(X_n)$) a été déterminée.

**8.** Procédé selon au moins l'une des revendications 5 à 7, **caractérisé en ce que** les paramètres (pente, décalage) de l'association fonctionnelle, en particulier les paramètres (pente$_0$, décalage$_0$) déterminés pendant une phase d'apprentissage du système, sont utilisés pour détecter une perte de pression.

**9.** Procédé selon au moins l'une des revendications 1 à 8, **caractérisé en ce que** l'analyse de bruit et/ou la détermination des paramètres de l'association fonctionnelle sont réalisées pendant la phase d'apprentissage du système au cours de laquelle des valeurs comparatives sont définies et/ou pendant la phase de surveillance de pression.

**10.** Produit de programme informatique, **caractérisé en ce qu'**il définit un algorithme qui comprend un procédé selon au moins l'une des revendications 1 à 9.

Fig. 1

a)

b) $|A_k - A_{k-1}|$

T

$t_4$

Flag "Noise"

c) 1

$t_1$ $t_2$ $t_3$

## Fig. 2

**Fig. 3**

```
        ┌─────────┐
        │   401   │
        └────┬────┘
             │
             ▼
 ┌──────▶┌─────────┐
 │       │   402   │
 │       └────┬────┘
 │            │
 │            ▼
┌─────────┐ ┌─────────┐
│   406   │ │   403   │
└─────────┘ └────┬────┘
     ▲           │
     │           ▼
     │  Nein   ◇ 404 ◇
     └──────────   
                   │ Ja
                   ▼
               ┌─────────┐
               │   405   │
               └─────────┘
```

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926616 C2
- DE 10058140 A1
- WO 2005072995 A1, Schrift
- US 6644108 B